(19) Europäisches Patentamt
European Patent Office
Office européen des brevets

(11) **EP 4 576 930 A1**

(12) **EUROPEAN PATENT APPLICATION**

(43) Date of publication:
**25.06.2025 Bulletin 2025/26**

(21) Application number: **23219530.5**

(22) Date of filing: **21.12.2023**

(51) International Patent Classification (IPC):
**H05B 3/26** (2006.01)     **G01F 1/684** (2006.01)
**G01N 25/16** (2006.01)     **G01N 25/18** (2006.01)
**H01C 7/00** (2006.01)

(52) Cooperative Patent Classification (CPC):
**H05B 3/265; G01N 21/1702; G01N 29/2418;**
G01F 1/6845; H01C 7/006; H05B 2203/013;
H05B 2203/016

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
- **GHADERI, Mohammadamir**
  **93047 Regensburg (DE)**
- **TUMPOLD, David**
  **85551 Kirchheim b. München (DE)**
- **MITTEREDER, Tobias**
  **81369 München (DE)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **MEMS HEATER AND MEMS FLUID SENSOR**

(57)    A MEMS heater comprising a Joule heater element with an electrically conductive structure having a first thermal conductance and being configured to emit in an electrically activated condition a thermal (IR) radiation; and a thermally conductive heat spreader structure having a second thermal conductance, wherein the heat spreading structure is thermally coupled to the electrically conductive structure of the Joule heater element; wherein, in a vertical projection, the heat spreading structure has an area which at least partially overlaps the electrically conductive structure of the Joule heater element, and wherein the second thermal conductance of the heat spreading structure is higher than the first thermal conductance of the electrically conductive structure of the Joule heater element. The present disclosure relates to an improvement of the thermal uniformity, and hence (long-term) operational stability, of the MEMS heater by means of the heat spreading structure.

Fig. 1A

EP 4 576 930 A1

**Description**

Technical Field

Embodiments of the present disclosure relate to a MEMS heater comprising a Joule heater element and to a MEMS fluid (gas or liquid) sensor using the Joule heater element. Embodiments further relate to a MEMS heater having a thermal uniformity improvement by a heat spreader structure. The present disclosure further relates to improving the thermal uniformity, and hence (long-term) operational stability, of the MEMS heater by means of a heat spreader structure.

Background

The sensing of environmental parameters in the ambient atmosphere, such as noise, sound, temperature and gases, e.g. environmental gas components, gains more and more importance in the implementation of appropriate sensors within mobile devices, home automation, such as smart home, and the automotive sector. Harmful gas concentrations can occur due to pollution and/or a malfunction of a device. However, the well-being of a person or animal is strongly influenced by the air quality. Thus, the exact and reliable gas detection in the environmental atmosphere by inexpensive, always available and accurate sensors is an upcoming topic in the future.

In the field of monitoring the air quality in our environment, there are several types of gas sensing concepts, for example, the non-dispersive infrared (NDIR) sensors, chemical sensors and photo-acoustical sensors (PAS = photoacoustic spectroscopy). A sensor effect often used bases on the excitation of gas molecules in a medium by (infrared) light with a certain wavelength. However, currently available NDIR or PAS systems are relatively expensive due to their complex setups or special components. Further, chemical sensors show a relatively poor selectivity compared to single-wavelength or filter containing optical systems. A typical optical sensor, e.g. a PAS or NDIR sensor, comprises a radiation source (e.g. an infrared emitter in form of a miniature light source to generate the light signal for gas sensing application), filter elements for a wavelength selection, a detector and the sample area where the light between the radiation source and the detector interacts with the environmental medium.

The IR emitter (= radiation source) should reliably reach operational temperatures above 600°C to generate sufficient optical output power.

Thus, there is a particular need to be able to operate a MEMS heater (thermal emitter) as accurately and, also, as inexpensively as possible over the lifetime of a gas sensor using such a MEMS heater.

Such a need can be solved by the MEMS heater according to claim 1 and the MEMS fluid sensor according to claim 14.

Further specific implementations of the present concept for a MEMS heater are defined in the dependent claims.

According to an embodiment, a MEMS heater comprises - a Joule heater element with an electrically conductive structure having a first thermal conductance and being configured to emit in an electrically activated condition a thermal (IR) radiation, and - a thermally conductive heat spreading structure having a second thermal conductance, wherein the heat spreading structure is thermally coupled to the electrically conductive structure of the Joule heater element, - wherein, in a vertical projection, the heat spreading structure has an area which at least partially overlaps the electrically conductive structure of the Joule heater element, and wherein the second thermal conductance of the heat spreading structure is higher than the first thermal conductance of the electrically conductive structure of the Joule heater element.

Thus, the MEMS heater can reliably reach operational temperatures above 600°C to provide sufficient optical output power by avoiding large thermal gradients in the electrically conductive structure of the Joule heater element.

According to an embodiment, a MEMS fluid sensor comprises - the thermal MEMS emitter for emitting thermal radiation, - a measurement volume having a target fluid , e.g. a target gas or target liquid, and providing an optical interaction path for the emitted thermal radiation, and - an acoustic transducer or a direct thermal detector for providing a detector output signal based on the optical interaction of the emitted thermal radiation with the target fluid in the measurement volume.

Summary

The operational temperature in an infrared (IR) emitter is major reliability concern. Generally, the MEMS joule heater reaches temperatures above 600°C to generate sufficient optical output power required for the gas sensing during a gas measurement operation. The inventors of the present disclosure have recognized that a low voltage emitter design optimization, e.g. in a poly-Si heater, tends to result in large thermal non-uniformities in the poly-Si heater, which over time may result in a change in material constitution of the heater and long term ohmic drift and/or fatigue.

Based on the above considerations, the inventors provide an improved concept for an improved MEMS heater overcoming the above drawbacks and problems.

The present disclosure describes a MEMS heater which, for example, may be part of a MEMS gas or fluid sensor that is able to sense at least one component of the environmental atmosphere. The MEMS heater comprises a Joule heater structure (e.g. in form of a emitter membrane), wherein the thermal uniformity (and hence, the long-term stability of the emission characteristics) of the MEMS heater is improved by means of a heat spreading structure thermally coupled to (and at least partially overlapping) the electrically conductive structure of the comprising Joule heater element, wherein the thermal conductance of the heat spreading structure is higher than the thermal conductance of the electrically conductive structure of the Joule heater element. The Joule heater element configured to emit infrared or mid-infrared radiation may be used in any MEMS device having an IR radiation source.

The MEMS heater allows to improve the thermal distribution, and hence the long term stability, of the Joule heater element (e.g. in form of a emitter membrane) as a sub-component of a sensor system especially for low voltage designs.

Thus, embodiments of the present concept describe a microelectromechanical (MEMS) heater/heating structure (MEMS heater) in which a passive layer with low thermal resistance, i.e. a heat spreading structure or a plurality thereof, is integrated with the active heating element or structure (the electrically conductive structure of a Joule heater element 12), improving the thermal profile uniformity over the active heater structure, and inhibiting the formation of hotspots on the heating element/heater, effectively lowering the peak temperature experienced in parts of the active heater or heating element (the Joule heater element).

According to an embodiment, the heating structure (the electrically conductive structure of the Joule heater element) may be made of semiconductor material, in which the heat spreading structure enhances thermal profile uniformity and improves the stability of the heater over lifetime of the heater, by reducing local effects on grain size and dopant distribution (dopant segregation) as well as a reduced thermal strain gradient on the heater, hence enabling low voltage emitter by ensuring low ohmic drift over the emitter lifetime.

The structure of the heat spreader may be optimized (for instance, by layout and/or thickness) for various targets and combinations thereof, e.g. thermal uniformity, response time, mechanical stability and a plurality of other heat spreading characteristics. The heat spreader structure may mimic the shape of the heater, or may be of any other design that produces the target performance. The heat spreader structure may (partially) or may not be mechanically and or thermally connected to the bulk Si chip.

Brief Description of the Figures

In the following, embodiments of the present disclosure are described in the following in more detail while making reference to the accompanying drawings, in which:

Fig. 1a-b    show a schematic top (plane) view and a schematic cross-sectional view of a MEMS heater;

Fig. 2a-d    show a schematic top (plane) views of the MEMS heater along with exemplary implementations of the heater spreader structure; and

Fig. 3    shows a schematic block diagram of a fluid sensor using the thermal emitter (MEMS heater) according to an embodiment.

Before discussing the present embodiments in further detail using the drawings, it is pointed out that in the figures and the specification identical elements and elements having the same functionality and/or the same technical or physical effect are usually provided with the same reference numbers or are identified with the same name, so that the description of these elements and of the functionality thereof as illustrated in the different embodiments are mutually exchangeable or may be applied to one another in the different embodiments.

Detailed description of illustrative embodiments

In the following description, embodiments are discussed in detail, however, it should be appreciated that the embodiments provide many applicable concepts that can be embodied in a wide variety of a thermal emitter. The specific embodiments discussed are merely illustrative of specific ways to implement and use the present concept, and do not limit the scope of the embodiments. In the following description of embodiments, the same or similar elements or elements that have the same functionality are provided with the same reference sign or are identified with the same name, and a repeated description of elements provided with the same reference number or being identified with the same name is typically omitted. In the following description, a plurality of details is set forth to provide a more thorough explanation of embodiments of the disclosure.

However, it will be apparent to one skilled in the art that other embodiments may be practiced without these specific details. In other instances, well-known structures and devices are shown in block diagram form rather than in detail in order to avoid obscuring examples described herein. In addition, features of the different embodiments described herein may be combined with each other, unless specifically noted otherwise.

It is understood that when an element is referred to as being "connected" or "coupled" to another element, it may be directly connected or coupled to the other element, or intermediate elements may be present. Conversely, when an element is referred to as being "directly" connected to another element, "connected" or "coupled," there are no intermediate elements. Other terms used to describe the relationship between elements should be construed in a similar fashion (e.g., "between" versus "directly between", "adjacent" versus "directly adjacent", and "on" versus "directly on", etc.).

For facilitating the description of the different embodiments, the figures comprise a Cartesian coordinate system x, y, z, wherein the x-y-plane corresponds, i.e. is parallel, to a first main surface region of a substrate (= a reference plane = x-y-plane), wherein the direction vertically up with respect to the reference plane (x-y-plane) corresponds to the "+z" direction, and wherein the direction vertically down with respect to the reference plane (x-y-plane) corresponds to the "-z" direction. In the following description, the term "lateral" means a direction parallel to the x- and/or y-direction, i.e. parallel to the x-y-plane, wherein the term "vertical" means a direction parallel to the z-direction.

In the following description, a thickness of an element usually indicates a vertical dimension of such an element. In the figures, the different elements are not necessarily drawn to scale. Thus, the illustrated dimensions of the different elements may not be necessarily drawn to scale.

In the description of the embodiments, terms and text passages placed in brackets (next to a described element or function) are to be understood as further explanations, exemplary configurations, exemplary additions and/or exemplary alternatives of the described element or function.

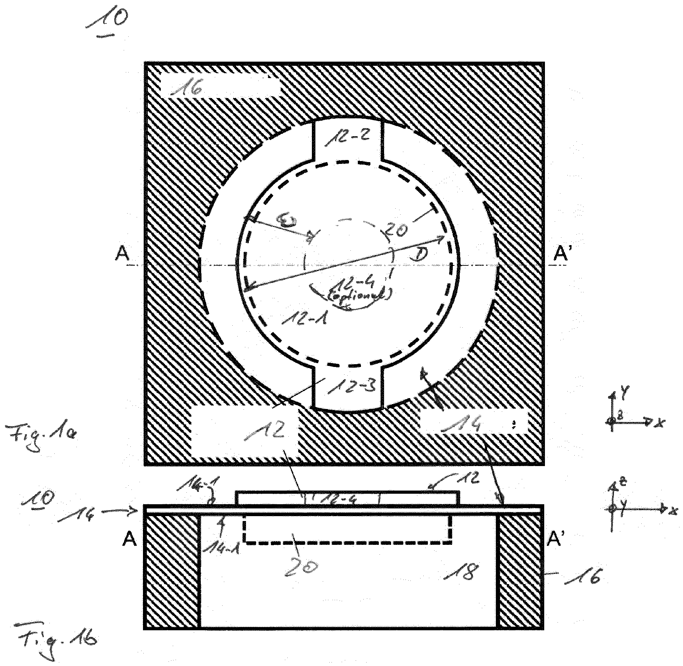

Fig. 1a shows a schematic top view (parallel to the x-y-plane) of an exemplary MEMS heater 10 (MEMS heater = Joule heater) and Fig. 1b exemplarily shows a schematic cross-sectional view (parallel to the x-z-plane) along a sectional line AA' of the exemplary MEMS heater 10.

As shown in Figs. 1a-b, the MEMS heater 10 comprises a Joule heater element 12 with an electrically conductive structure 12-1 having a first thermal conductance and being configured to emit in an electrically activated condition a thermal (IR) radiation. The MEMS heater 10 further comprises a thermally conductive heat spreading structure 20 having a second thermal conductance, wherein the heat spreading structure 20 is thermally coupled to the electrically conductive structure 12-1 of the Joule heater element 12. In a vertical projection, the heat spreading structure 20 at least partially overlaps the electrically conductive structure 12-1 of the Joule heater element 12, and wherein the second thermal conductance of the heat spreading structure 20 is higher than the first thermal conductance of the electrically conductive structure 12-1 of the Joule heater element 12. The electrically conductive structure 12-1 of the Joule heater element 12 is arranged on (over) a cavity 18 in a substrate 16 to which the MEMS heater 10 is attached.

The operating principle of the MEMS heater is usually called "Joule heating" and also known as resistive, resistance, or Ohmic heating. The Joule heating of the MEMS heater is the process by which the passage of an electric current (in response to an applied drive signal, e.g. a voltage) through an electrical conductor of the MEMS heater produces heat.

According to an embodiment, the laterally extending area of the heat spreading structure is, in a vertical projection, between 10 and 150% or between 20 and 120 % of the laterally extending area of the Joule heater element. For example, the heat spreading structure may have (in a vertical projection) an area overlap of at least 10 %, 20 %, 40 %, 60% or 80 % or may have a have a (nearly) complete overlap (e.g. 90 - 100 %) with the electrically conductive structure 12-1 of the Joule heater element 12.

The shape of the heat spreader structure 20 may be chosen or optimized (e.g. by layout and/or thickness) for various targets and combinations thereof, e.g. high thermal uniformity, high response time, high mechanical stability, etc. The heat-spreader structure 20 may mimic the shape of the heater 12 (the electrically conductive structure 12-1 of the Joule heater element 12), or may be of any other design that produces the target performance. The heat-spreader structure 12 may (partially) or may not be mechanically and/or thermally connected to the bulk Si chip.

The added the heat spreader structure 20, e.g. a bulk Si mass with a thickness of at least 2 $\mu$m extending below the Joule heater element 12, e.g. the center of the Joule heater element 12, disperses the heat over the heater center. At a fixed optical power, the peak surface temperature over the membrane 14 is lower for the Joule heater element 12 with the added heat spreader 20.

The improved thermal uniformity of the Joule heater element 12 enables the realization of low voltage emitter - by the improved heater stability. Further, the lifetime of the Joule heater element 12 by reducing the local peak temperature experienced by the heater may be significantly improved.

The MEMS heater 10 comprises the Joule heater element 12 with the electrically conductive structure 12-1, e.g. in form of an electrically conductive semiconductor section, which may comprise a (highly) doped poly-Si material, or in form of a (electrically conductive) metallic layer. The electrically conductive structure 12-1 of the Joule heater element 12 may be connected between an input region 12-2 and output region 12-3 of the Joule heater element 12 for supplying an activation signal $S_{ACT}$ to the electrically conductive structure 12-1.

As exemplarily shown in Figs. 1a-b, the thermal emitter 10 may comprise a membrane 14 which is supported by the substrate 16 (e.g. a bulk Si substrate). The membrane 14 may, for example, comprise an insulating material, such as a SiN and/or a SiOz material.

According to an embodiment, the membrane 14 may comprise the electrically conductive section 12-1 of the Joule heater element 12, e.g. the electrically conductive semiconductor material, such as poly silicon (poly-Si), or a metal. Thus, the electrically conductive section 12-1 of the Joule heater element 12 may be part of the membrane 14 or of a layer structure of the membrane 14 or may be integrated into the membrane 14 or into a layer structure of the membrane 14.

Alternatively, the Joule heater element 12 may be part of the membrane 14, e.g. a highly doped poly-Si region 12 of a (low doped or un-doped) poly-Si membrane 14.

According to an embodiment, wherein the electrically conductive section 12-1 of the Joule heater element 12, e.g. the electrically conductive semiconductor material layer, such as poly silicon (poly-Si), or a metal layer, may be formed (e.g. by deposition) on a first main surface region 14-1 of the membrane 14. Thus, the electrically conductive section 12-1 of the Joule heater element 12 and the membrane 14 may form together a layer structure.

According to an embodiment, the heat spreading structure 20, e.g. having semiconductor material, such as bulk silicon, may formed on a second main surface region 14-2 of the membrane 14 which faces the cavity 18 in the substrate 16. Thus, the electrically conductive section 12-1 of the Joule heater element 12 and the heat spreading structure 20 may formed on opposite main surface regions 14-1, 14-2 of the membrane 14.

In other words, the Joule heater element 12 may be arranged on (the front side of) the membrane 14 and the heat spreading structure 20 may be attached to (the back side of) the membrane 14 and extends below into the cavity 18 in the substrate 16.

According to an embodiment, the second thermal conductance (= 1/resistance) of the heat spreading structure 20 is at least 2, 4 or 6 times higher than the first thermal conductance of the electrically conductive structure 12-1 of the Joule heater element 12.

Based on the construction of the Joule heater structure 12, such a radiation source (MEMS heater) 10, e.g. for a gas or fluid sensor, can provide a relatively high thermal resistance (= low thermal conductance-) for achieving a relatively high energy efficiency (= high temperature increase per watt input power), wherein the thermal emitter can be operated at relatively high operating temperatures (e.g. at 600 °C or higher) due to this setup. Moreover, the relatively high second thermal conductance of the heat spreading structure 20 provides a relatively high thermal mass for providing an improved thermal distribution and, thus, an improved thermal uniformity in the electrically conductive section 12-1 of the Joule heater element 12. Thus, the long term stability of the Joule heater element 12 can be increased, especially for low voltage designs, wherein the MEMS heater 10 may be operated with a reduced systematic (up)drift of the electrical characteristic of the Joule heater element 12 as a sub-component of a sensor system for achieving a high PPM accuracy of a gas sensor (using the MEMS heater 10) over lifetime.

According to an embodiment, the material of the electrically conductive structure 12-1 of the Joule heater element 12 and the material of the heat spreading structure 20 may comprise within a range of ± 5 % the same thermal expansion coefficient. According to an embodiment, the electrically conductive structure 12-1 of the Joule heater element 12 and the heat spreading element 20 comprise the same material (having the same thermal expansion coefficient), wherein the heat spreading structure 20 may comprise a larger thickness than the electrically conductive structure 12-1 of the Joule heater element 12.

Thus, the heat spreading structure 20 does (essentially) not add to the residual mechanical stress of the Joule heater element 12.

According to a further embodiment, the heat spreader structure 20 may be realized by partially removing the bulk silicon under the heater membrane 14, in which the remaining structure distributes the generated heat by thermal conduction. For example, the heat spreader structure 20 may be realized using a double Bosch process, wherein a part of the bulk silicon material of the substrate 16 may be patterned and remains suspended under the membrane 14 of the Joule heater element 12.

According to a further embodiment, the heat spreader structure 20 may be adhered (glued) to the back side 14-2 of the membrane 14. According to a further embodiment, the heat spreader structure 20 may be deposited (e.g. sputtered) to the back side 14-2 of the membrane 14.

According to an embodiment, the electrically conductive structure 12-1 (and the contact regions 12-2, 12-3) of the Joule heater element 12 may comprise a semiconductor material (poly-Si or SiC) or a metallic material. Thus, the electrically conductive structure 12-1 (and the contact regions 12-2, 12-3) of the Joule heater element 12 may comprise an electrically conductive semiconductor layer or metallic layer.

According to an embodiment, the electrically conductive structure 12-1 of the Joule heater element 12 may comprise a polysilicon material having a layer thickness between 200 and 2000 nm, e.g. about 1000 nm +/- 150 nm (between 850 and 1150 nm), wherein the heat spreading structure 20 may comprises a silicon material (e.g. bulk silicon) having a thickness in a range between 2 and 50 $\mu$m, between 2 and 10 $\mu$m or between 4 and 10 $\mu$m.

According to an embodiment, the electrically conductive structure 12-1 of the Joule heater element 12 may comprise a diameter or lateral extension D between 100 and 1000 $\mu$m.

The thermal non-uniformity of the electrically conductive structure 12-1 of the Joule heater element 12 which is operating with an added heat spreading structure 20 in comparison with the heater 10 without such a heat spreader may be reduced by at least 80% when the thickness of the heat spreader structure 20 is at least 2 $\mu$m, and may be reduced by at least 90% when the thickness of the heat spreader structure 20 is at least 5 $\mu$m.

The aforementioned thermal non-uniformity of the electrically conductive structure 12-1 of the Joule heater structure 12 may be defined as,

$$\text{Non-uniformity} = (T_{peak} - T_{avg})/(T_{avg} - T_{amb})$$

Wherein the peak temperature $T_{peak}$ may denote the highest surface temperature of the electrically conductive structure 12-1 of the Joule heater element 12, the average temperature $T_{avg}$ may denote the temperature averaged over the entirety of the surface of the electrically conductive structure 12-1 of the Joule heater element 12, and the ambient temperature $T_{amb}$ may denote the ambient surrounding temperature in which the heater 10 may be configured to operate.

It is further to be noted that the thermal non-uniformity of the electrically conductive structure 12-1 of the Joule heater element 12 may be considerably small, e.g. less than 0.025, and may not decrease further in a significant proportion for values of the thickness of the heat spreader structure 20, which may be comprising a silicon material e.g. bulk silicon, greater than 5 $\mu$m. Thus, the electrically conductive structure 12-1 of the Joule heater element 12 may not be sensitive to the thickness variation greater than 5 $\mu$m. In other words, the thermal non-uniformity of the electrically conductive structure 12-1 may reach a minimal value (saturation) when the thickness of the heat spreader structure 20 exceeds 5 $\mu$m. For example, the thermal non-uniformity of the electrically conductive structure 12-1 may reach a minimal value when the thickness of the heat spreader structure 20 is at least 5 $\mu$m and the overlap (coverage) between the electrically conductive structure 12-1 of the Joule heater element 12 and the heat spreader structure 20 is at least 90%.

Due to the added heat spreader structure 20, the heater 10 may require a higher operating voltage which may be compensated by the heater layout. However, the thermal non-uniformity of the electrically conductive structure 12-1 of the Joule heater element 12 may be reduced by at least 90% when the thickness of the heat spreader structure 20 is at least 5 $\mu$m, wherein the operating voltage requires in that case only a low increase of about 10 - 20%.

According to an embodiment, the electrically conductive structure 12-1 of the Joule heater element 12 may form a branched current path separated by a center section 12-4 of the Joule heater element 12. Thus, the electrically conductive structure 12-1 of the Joule heater element 12 may laterally surround the center section 12-4, wherein the electrically conductive structure 12-1 of the Joule heater element 12 is electrically isolated from the center section 12-4 and is thermally coupled to the center section 12-4. The center section 12-4 of the electrically conductive structure 12-1 of the Joule heater element 12 may comprise a semiconductor or metallic layer encapsulated in an insulating material or comprises an insulating material layer.

As exemplarily shown in Figs. 1a-b, the electrically conductive section 12 may form a ringshaped heating element 12 having a width W, that produces during an activated state (= electrical energization of the electrically conductive section 12) heat that may also spread into/through the (optional) center section 12-4. The, center section 12-4 may comprise a low doped or un-doped semiconductor (e.g. poly Si) material so that the electrically conductive section 12 forms the branched current path separated by the center section 12-1. Further, the regions 12-1, 12-2, 12-3, 12-4 may have the same layer thickness. Thus, the center section 12-4 and the electrically conductive section 12-1 may together form a re-suiting heating structure or heating element 12 for emitting or dissipating heat in form of thermal (e.g. infrared) radiation, e.g. into a measurement cavity. Thus, the heated ringshaped electrically conductive section 12 may provide for a relatively uniform temperature profile in the heating structure.

According to a further embodiment, the electrically conductive section 12-1 may also comprise one of a circle, square, oval and ellipse shape (or any convex polygon shape), wherein this list of shapes of the electrically conductive section 12 is not to be regarded as exhaustive.

Thus, embodiments of the present disclosure provide a MEMS heater 10 with an active joule heating structure 12 which is supported and/or combined by a passive layer (heat spreader 20) with a (high) thermal mass and low thermal resistance properties to spread local (inhomogeneous) temperature peaks, i.e. hot spots, on the active heating structure 12-1 (= on the electrically conductive structure 12-1 of the Joule heater element 12) resulting in an enhanced homogenously distributed thermal profile, in which the thermal uniformity may be improved and/or optimized by varying the thickness and the layout of the heat spreader structure 20.

The heat spreader structure 20 improves on the electrical and thermo-mechanical stability of the Joule heater element 12 by lowering the peak temperature exposed upon the active heating structure 12-1 (the electrically conductive structure 12-1) of the Joule heater element 12.

The temperature distribution uniformity over the electrically conductive section 12-1 of the Joule heater element 12 intrinsically improves, allowing for low voltage heater designs with low or negligible drift characteristics over sensor's lifetime.

This structure of the MEMS heater 10 inhibits the formation of a hotspot on the electrically conductive section 12-1 of the Joule heater element 12. Thus compared to a heater structure without a heat spreader, for a given optical output power, the heater operates at a comparatively lower peak temperature, improving the emitter resilience, e.g. grain size change and dopant diffusion during lifetime. Due to the uniform thermal distribution, the lateral thermal strain gradient is reduced over the electrically conductive section 12-1 of the heater 12, decreasing the chance of failure due to heater fracture modes.

Consequently, a low temperature variation, i.e.

high thermal uniformity, at temperatures above the dopant activation energy (~600°C) in poly-Si avoids to change the local dopant distribution over time. Thus, a broader or larger the Joule heater structure (Joule wire) 12 (e.g. the sum of R squares * membrane thickness) with a relatively large (lateral) footprint can be supplied with a relatively low driving signal (e.g. below 40 V = low-voltage class) as the degradation of the resistor structure 12, i.e. the change of the material properties (characteristics) of the Joule heater structure 12), and, thus, the drift of the electrical characteristics, can be avoided or is at least strongly reduced (when compared to conventional heater structures).

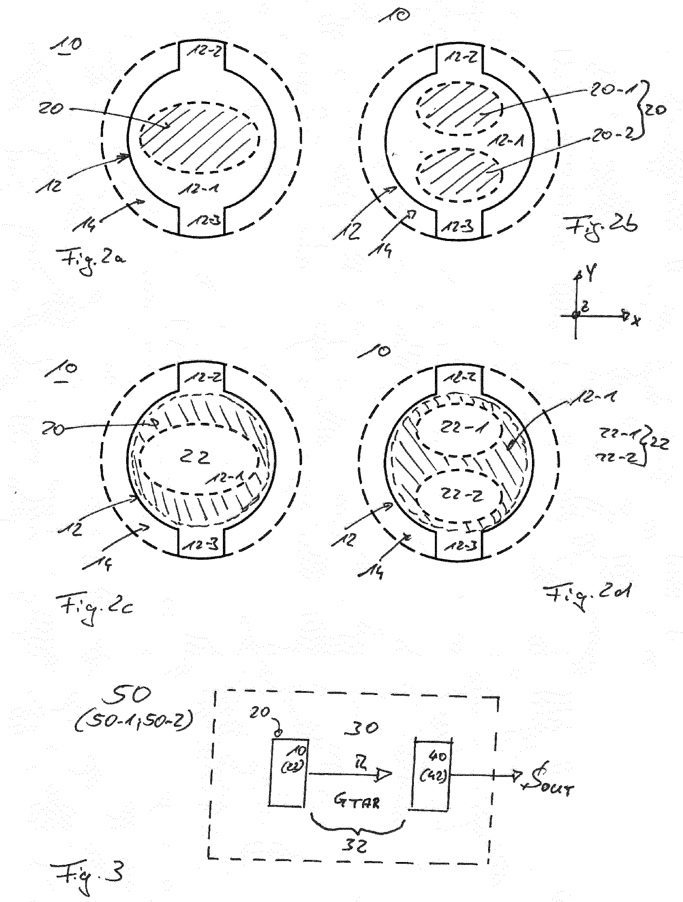

Figs. 2a-d show different exemplary schematic top (plane) views of the MEMS heater 10 along with some possible implementations of the heat spreader structure 20. As already described above, the shape of the heat spreader structure 20 may be chosen or optimized (e.g. by layout and/or thickness) for various targets and combinations thereof, e.g. high thermal uniformity, high response time, high mechanical stability, etc. The shape (circumferential line) of the heat-spreader structure 20 may mimic the shape (the circumferential line) of the electrically conductive structure 12-1 of the heater structure 12. Alternatively, the shape (circumferential line) of the heat-spreader structure 20 may be of any other design that produces the target performance. The heat-spreader structure 12 may (partially) or may not be mechanically and/or may be thermally connected to the bulk Si chip.

As exemplarily shown in Fig. 2a, the heat spreader structure 20 may comprise a single element. The hatched area of the heat spreader structure 20 represents the resulting (lateral) footprint of the heat spreader structure 20. As exemplarily shown in Fig. 2a, the heat spreader structure 20 may have an elliptic shape (footprint). However, the heat spreader structure 20 may comprise a number of shapes (footprints) including a circle, square, oval and ellipse (or any polygon shape), wherein the list of shapes of the heat spreader structure 20 may not to be regarded as exhaustive.

The heat spreader structure 20 may comprise a plurality (at least two, three, four, ...) of distributed (lateral offset) partial elements 20-#, wherein Fig. 2b exemplarily shows a heat spreader structure 20 having two partial elements 20-1, 20-2. The hatched areas of the two partial elements 20-1, 20-2 represent the resulting (lateral) footprint of the heat spreader structure 20. As exemplarily shown in Fig. 2b, the two partial elements 20-1, 20-2 may have an elliptic shape (footprint). However, the two partial elements 20-1, 20-2 may comprise a number of shapes (footprints) including a circle, square, oval and ellipse (or any polygon shape), wherein the list of shapes of the partial elements 20-# may not to be regarded as exhaustive.

The shape (circumferential line) of the heat-spreader structure 20 may also mimic the shape (the circumferential line) of the electrically conductive structure 12-1 of the heater structure 12, wherein the heat spreader structure 20 may comprise recess or void.

As exemplarily shown in Fig. 2c, the heat spreader structure 20 may comprise a single recess or void 22. The hatched area of the heat spreader structure 20 represents the resulting (lateral) footprint of the heat spreader structure 20. As exemplarily shown in Fig. 2c, the recess or void 22 of the heat spreader structure 20 may have an elliptic shape (footprint). However, the recess or void 22 of the heat spreader structure 20 may comprise a number of shapes (footprints) including a circle, square, oval and ellipse (or any polygon shape), wherein the list of shapes of the partial elements 20-# may not to be regarded as exhaustive.

Further, the recess or void 22 of the heat spreader structure 20 may form a thinning of the heat spreader structure 20 or may form a through hole through the heat spreader structure 20. The hatched area of the heat spreader structure 20 in Fig. 2c represents the resulting (lateral) footprint of the heat spreader structure 20 having the recess or void 22 in form of a through hole.

As exemplarily shown in Fig. 2d, the heat spreader structure 20 may comprise a plurality (at least two, three, four, ...) of distributed recess or void elements 22-#, wherein Fig. 2d exemplarily shows a heat spreader structure 20 having two recess or void elements 22-1, 22-2. As exemplarily shown in Fig. 2d, the recess or void elements 22-1, 22-2 of the heat spreader structure 20 may have an elliptic shape (footprint). However, the recess or void 22 of the heat spreader structure 20 may comprise a number of shapes (footprints) including a circle, square, oval and ellipse (or any polygon shape), wherein the list of shapes of the partial elements 20-# may not to be regarded as exhaustive. Further, the recess or void 22 of the heat spreader structure 20 may form a thinning of the heat spreader structure 20 or a through hole through the heat spreader structure 20. The hatched area of the heat spreader structure 20 of Fig. 2d represents the resulting footprint of the heat spreader structure 20 having the recess or void elements 22-1, 22-2 in form of a through hole.

Fig. 3 shows a schematic block diagram of a fluid (= gas or liquid) sensor 50 (50-1, 50-2) using the MEMS heater (thermal emitter or Joule heater) 10 according to an embodiment, e.g. according to Figs. 1a-b and 2a-d. According to an embodiment, the MEMS fluid sensor 50 comprises the MEMS heater 10 for emitting thermal radiation R as described with respect to Figs. 1a-b and 2a-d, a measurement volume 30 having target fluid $F_{TAR}$, e.g. a target gas $G_{TAR}$ or a target liquid, and providing an optical interaction path 32 for the emitted thermal radiation R, and an acoustic transducer 40 or a direct thermal detector 42 for providing a detector output signal $S_{OUT}$ based on the optical interaction of the emitted thermal radiation R with target fluid in the measurement volume 30.

According to an embodiment, the fluid sensor may be formed as a PAS (photoacoustic system) gas detector (fluid detector) 50-1, wherein the thermal emitter device 20 comprises a heater element 10 (Joule heater) having an electrically conductive semiconductor section 12, and a drive element 22. According to a further embodiment, the fluid sensor 50 may be formed as a NDIR (NDIR = non-dispersive infra-red) gas detector 50-2, wherein the thermal emitter device 20 comprises a (heater) element (Joule heater) 10 having an electrically conductive semiconductor section 12 and a drive element 22.

Additional embodiments and aspects are described which may be used alone or in combination with the features and functionalities described herein.

According to an embodiment, a MEMS heater comprises a Joule heater element with an electrically conductive structure having a first thermal conductance and being configured to emit in an electrically activated condition a thermal (IR) radiation; and a thermally conductive heat spreading structure having a second thermal conductance, wherein the heat spreading structure is thermally coupled to the electrically conductive structure of the Joule heater element; wherein, in a vertical projection, the heat spreading structure has an area which at least partially overlaps the electrically conductive structure of the Joule heater element, and wherein the second thermal conductance of the heat spreading structure is higher than the first thermal conductance of the electrically conductive structure of the Joule heater element, wherein the electrically conductive structure of the Joule heater element is arranged on a cavity in a substrate to which the MEMS heater is attached.

According to an embodiment, the heat spreading structure is electrically isolated from the electrically conductive structure of the Joule heater element.

According to an embodiment, the second thermal conductance of the heat spreading structure is at least 2 times higher than the first thermal conductance of the electrically conductive structure of the Joule heater element.

According to an embodiment, the material of the Joule heater element and the material of the heat spreading structure comprise within a range of ± 5 % the same thermal expansion coefficient.

According to an embodiment, in a vertical projection, the laterally extending area of the heat spreading structure is between 10 and 150% or between 20 and 120 % of the laterally extending area of the Joule heater element.

According to an embodiment, the Joule heater element and the heat spreading element comprise the same material, wherein the heat spreading structure comprises a larger thickness than the electrically conductive structure of the Joule heater element.

According to an embodiment, the electrically conductive structure of the Joule heater element comprises a semiconductor material (poly-Si or SiC) or a metallic material.

According to an embodiment, the electrically conductive structure of the Joule heater element comprises a polysilicon material having a layer thickness between 200 and 2000 nm (about 1000 nm +/- 150 nm), and wherein the heat spreading structure comprises a silicon material (e.g., bulk silicon) having a thickness in a range between 2 and 50 $\mu$m.

According to an embodiment, the heat spreading structure may have an area overlap of at least 10 % with the electrically conductive structure of the Joule heater element.

According to an embodiment, the electrically conductive structure of the Joule heater element forms a branched current path separated by a center section of the Joule heater element.

According to an embodiment, the electrically conductive structure of the Joule heater element laterally surrounds the center section, wherein the electrically conductive structure of the Joule heater element is electrically isolated from the center section and is thermally coupled to the center section.

According to an embodiment, the center section of the electrically conductive structure of the Joule heater element comprises a semiconductor or metallic layer encapsulated in an insulating material or comprises an insulating material layer.

According to an embodiment, the electrically conductive structure of the Joule heater element comprises an electrically conductive semiconductor or metallic layer.

According to an embodiment, a MEMS fluid (gas or liquid) sensor comprises the thermal MEMS emitter for emitting thermal radiation, a measurement volume having a target fluid and providing an optical interaction path for the emitted thermal radiation, and an acoustic transducer or a direct thermal detector for providing a detector output signal based on the optical interaction of the emitted thermal radiation with the target fluid in the measurement volume.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

In the foregoing detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1.  MEMS heater (10) comprising:

    a Joule heater element (12) with an electrically conductive structure (12-1) having a first thermal conductance and being configured to emit in an electrically activated condition a thermal (IR) radiation; and
    a thermally conductive heat spreading structure (20) having a second thermal conductance, wherein the heat spreading structure (20) is thermally coupled to the electrically conductive structure of the Joule heater element (12); wherein, in a vertical projection, the heat spreading structure (20) at least partially overlaps the electrically conductive structure of the Joule heater element (12), wherein the second thermal conductance of the heat spreading structure (20) is higher than the first thermal conductance of the electrically conductive structure (12-1) of the Joule heater element (12), and wherein the electrically conductive structure (12-1) of the Joule heater element (12) is arranged on a cavity (18) in a substrate (16) to which the MEMS heater (10) is attached.

2.  The MEMS heater (10) of claim 1, wherein the heat spreading structure (20) is electrically isolated from the electrically conductive structure (12-1) of the Joule heater element (12).

3.  The MEMS heater (10) of claim 1 or 2, wherein the second thermal conductance of the heat spreading structure (20) is at least 2 times higher than the first thermal conductance of the electrically conductive structure (12-1) of the Joule heater element (12).

4.  The MEMS heater (10) of any of the preceding claims, wherein the material of the Joule heater element (12) and the material of the heat spreading structure (20) comprise within a range of $\pm$ 5 % the same thermal expansion coefficient.

5.  The MEMS heater (10) of any of the preceding claims, wherein, in a vertical projection, the laterally extending area of the heat spreading structure (20) is between 10 and 150% or between 20 and 120 % of the laterally extending area of the Joule heater element (12).

6.  The MEMS heater (10) of any of the preceding claims, wherein the Joule heater element (12) and the heat spreading structure (20) comprise the same material, wherein the heat spreading structure (20) comprises a larger thickness than the electrically conductive structure (12-1) of the Joule heater element (12).

7.  The MEMS heater (10) of any of the preceding claims, wherein the electrically conductive structure (12-1) of the Joule heater element (12) comprises a semiconductor material (poly-Si or SiC) or a metallic material.

8.  The MEMS heater (10) of any of the preceding claims, wherein the electrically conductive structure (12-1) of the Joule heater element (12) comprises a polysilicon material having a layer thickness between 200 and 2000 nm (about 1000 nm +/- 150 nm), and wherein the heat spreading structure (20) comprises a silicon material (e.g., bulk silicon) having a thickness in a range between 2 and 50 $\mu$m.

9.  The MEMS heater (10) of any of the preceding claims, wherein the heat spreading structure may have an area overlap of at least 10 % with the electrically conductive structure (12-1) of the Joule heater element (12).

10.  The MEMS heater (10) of any of the preceding claims, wherein the electrically conductive structure (12-1) of the Joule heater element (12) forms a branched current path separated by a center section (12-4) of the Joule heater element (12).

11.  The MEMS heater (10) of claim 10, wherein the electrically conductive structure (12-1) of the Joule heater element (12) laterally surrounds the center section (12-1), wherein the electrically conductive structure of the Joule heater element (12) is electrically isolated from the center section (12-4) and is thermally coupled to the center section (12-4).

**12.** The MEMS heater (10) of claim 10 or 11, wherein the center section (12-4) of the electrically conductive structure (12-1) of the Joule heater element (12) comprises a semiconductor or metallic layer encapsulated in an insulating material or comprises an insulating material layer.

**13.** The MEMS heater (10) of any of the preceding claims, wherein the electrically conductive structure (12-1) of the Joule heater element (12) comprises an electrically conductive semiconductor or metallic layer.

**14.** A MEMS fluid sensor (50), comprising:

the thermal MEMS heater (10) for emitting thermal radiation according to any of the preceding claims,
a measurement volume (30) having a target fluid and providing an optical interaction path (32) for the emitted thermal radiation (R), and
an acoustic transducer (40) or a direct thermal detector (42) for providing a detector output signal ($S_{OUT}$) based on the optical interaction of the emitted thermal radiation (R) with the target fluid in the measurement volume (30).

10

16

12-2

E

20

A ——————————————— A'

D

12-4
(optional)

12-1

12-3

12

14

Fig. 1a

Y
z → x

10    14 →

14-1

12-4

12

A    14-1    A'

20    18    16

Fig. 1b

z
Y → x

Fig. 2a

Fig. 2b

Fig. 2c

Fig. 2d

Fig. 3

## EUROPEAN SEARCH REPORT

Application Number

EP 23 21 9530

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H11 271123 A (DENSO CORP) 5 October 1999 (1999-10-05) | 1-3,5,7, 9,13 | INV. H05B3/26 |
| Y | * paragraphs [0018] - [0048]; figures 1-7 * | 4,6,8, 10-12,14 | |
| | ----- | | ADD. G01F1/684 |
| Y | EP 1 417 151 B1 (NCSR DEMOKRITOS [GR]; TSAMIS CHRISTOS [GR] ET AL.) 3 January 2007 (2007-01-03) | 4,6,8 | G01N25/16 G01N25/18 H01C7/00 |
| A | * paragraphs [0017] - [0029]; figures 1-6 * | 1-3,5,7, 9-14 | |
| | ----- | | |
| Y | EP 3 904 846 A1 (INFINEON TECHNOLOGIES AG [DE]) 3 November 2021 (2021-11-03) | 10-12,14 | |
| A | * paragraphs [0018] - [0088]; figures 1-6 * | 1-9,13 | |
| | ----- | | |
| A | US 2019/137427 A1 (CASCINO SALVATORE [IT] ET AL) 9 May 2019 (2019-05-09) * abstract; figures 1-10 * | 1-14 | |
| | ----- | | **TECHNICAL FIELDS SEARCHED (IPC)** |
| A | FILIPOVIC LADO: "Reliability and Stability of MEMS Microheaters for Gas Sensors", 2021 IEEE INTERNATIONAL INTEGRATED RELIABILITY WORKSHOP (IIRW), IEEE, 4 October 2021 (2021-10-04), pages 1-10, XP034044575, DOI: 10.1109/IIRW53245.2021.9635162 [retrieved on 2021-12-02] * the whole document * | 1-14 | H05B G01F G01N H01C |
| | ----- | | |

The present search report has been drawn up for all claims

| Place of search | Date of completion of the search | Examiner |
|---|---|---|
| Munich | 13 June 2024 | Rucha, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9530

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| JP H11271123 | A | 05-10-1999 | JP | 3867393 B2 | 10-01-2007 |
| | | | JP | H11271123 A | 05-10-1999 |
| | | | US | 6450025 B1 | 17-09-2002 |
| EP 1417151 | B1 | 03-01-2007 | AT | E350333 T1 | 15-01-2007 |
| | | | CN | 1538934 A | 20-10-2004 |
| | | | EP | 1417151 A1 | 12-05-2004 |
| | | | JP | 2005502480 A | 27-01-2005 |
| | | | US | 2004195096 A1 | 07-10-2004 |
| | | | WO | 03011747 A1 | 13-02-2003 |
| EP 3904846 | A1 | 03-11-2021 | CN | 113567381 A | 29-10-2021 |
| | | | EP | 3904846 A1 | 03-11-2021 |
| | | | KR | 20210134232 A | 09-11-2021 |
| | | | US | 2021341433 A1 | 04-11-2021 |
| US 2019137427 | A1 | 09-05-2019 | NONE | | |

EPO FORM P0459

For more details about this annex : see Official Journal of the European Patent Office, No. 12/82